Europäisches Patentamt

European Patent Office

Office européen des brevets

(19)

(11) Numéro de publication : **0 089 899**
**B1**

(12) **FASCICULE DE BREVET EUROPÉEN**

(45) Date de publication du fascicule du brevet :
28.08.85

(51) Int. Cl.⁴ : **B 60 L 3/10**

(21) Numéro de dépôt : **83400599.3**

(22) Date de dépôt : **23.03.83**

(54) **Procédé pour la détection et la correction du patinage des roues d'un engin moteur de chemin de fer et dispositif pour sa mise en oeuvre.**

(30) Priorité : 24.03.82 FR 8204980

(43) Date de publication de la demande :
28.09.83 Bulletin 83/39

(45) Mention de la délivrance du brevet :
28.08.85 Bulletin 85/35

(84) Etats contractants désignés :
AT BE CH DE IT LI LU NL

(56) Documents cités :
FR-A- 2 351 817

(73) Titulaire : **FAIVELEY ENTREPRISES**
**93, rue du Docteur-Bauer**
**F-93404 Saint-Ouen Cedex (FR)**

(72) Inventeur : **Moulin, Bernard**
**42, rue Gabriel d'Estrée**
**F-37270 Montlouis Sur Loire (FR)**
Inventeur : **Erckelboudt, André**
**17, allée des Cèdres**
**F-37270 Montlouis Sur Loire (FR)**

(74) Mandataire : **Bouju, André**
**38 Avenue de la Grande Armée**
**F-75017 Paris (FR)**

Jouve, 18, rue St-Denis, 75001 Paris, France

## Description

La présente invention concerne un procédé pour la détection et la correction du patinage des roues d'un essieu d'un engin moteur de chemin de fer.

L'invention concerne également un dispositif pour mettre en œuvre ce procédé.

Le phénomène de patinage se produit le plus souvent pendant la phase de démarrage et de mise en vitesse de l'engin moteur, mais il peut également se produire à tout instant par suite d'une diminution fortuite de l'adhérence des roues sur les rails, due par exemple aux conditions atmosphériques.

Il est connu de détecter le patinage par mesure des vitesses de rotation des essieux. La différence de ces vitesses, qui peut ne pas être nulle si l'appareil de mesure n'effectue pas de correction de diamètre des roues, varie rapidement en cas de patinage d'un des essieux et déclenche un action de correction.

Mais on se heurte à deux difficultés contradictoires pour fixer le seuil de déclenchement de l'action correctrice. D'une part, le déclenchement ne doit se produire que sur patinage effectif et non sur des accélérations importantes de l'engin moteur qui amplifient la différence de vitesse de rotation normale mentionnée plus haut. D'autre part, le seuil doit être assez bas pour détecter un patinage entretenu dans lequel la différence de vitesse n'évolue que lentement.

Pour améliorer la détection, on a utilisé la mesure de la différence d'accélération des essieux. Mais, au moment de la correction, l'essieu qui patinait décélère fortement, ce qui conduit l'appareil de détection à détecter faussement un patinage de l'autre essieu.

Dans tous les cas, la correction s'effectue par une diminution rapide et importante de l'effort de traction, suivie d'une reprise lente, en général à amortissement exponentiel, qui n'est pas approprié aux conditions d'adhérence du moment.

La présente invention vise à réaliser un procédé et un dispositif qui permettent d'identifier de façon sûre l'essieu qui patine, et qui corrige méthodiquement le patinage de manière à conserver à chaque instant un effort de traction optimal.

Ce résultat est obtenu, conformément à l'invention, en effectuant les opérations suivantes :

a) on détermine la dérivée de l'accélération de chaque essieu ;

b) on élabore, pour chaque essieu, un signal de détection qui est une combinaison linéaire de l'accélération et de sa dérivée ;

c) on élabore des signaux de correction partiels croissants en fonction de chaque signal de détection respectif ;

d) on détermine le plus grand des signaux de correction partiels pour constituer un signal de correction commun ;

e) on calcule un signal de différence entre le signal de correction et une valeur de consigne ;

f) on règle l'effort de traction par action sur un organe moteur de l'engin moteur en fonction dudit signal de différence.

L'intervention de l'accélération agit comme dans la technique classique, mais celle de la dérivée de l'accélération, à laquelle on peut donner un poids important dans la combinaison permet d'identifier exactement l'essieu qui commence à patiner et de ne pas considérer à tort un certain essieu comme patinant alors que l'autre essieu décélère.

Suivant une réalisation préférée du procédé, quand le signal de correction commun atteint, en décroissant, une fraction prédéterminée de la valeur de consigne, on le fait décroître plus lentement.

On évite ainsi une reprise brusque de l'effort de traction qui pourrait provoquer immédiatement un nouveau patinage.

Dans le cas relativement fréquent où le conducteur affiche une valeur de consigne correspondant à un effort de traction prédéterminé optimal, on effectue les opérations suivantes :

— on met en mémoire cette valeur de consigne ;

— on bloque la mémoire quand apparaît un signal de correction commun qui dépasse une valeur prédéterminée ;

— on décrémente la valeur de consigne mémorisée d'une fraction prédéterminée quand le signal de correction commun dépasse une fraction prédéterminée de cette valeur de consigne.

En cas de patinage important et persistant, cette façon de procéder a pour effet que la reprise de l'effort s'effectuera sur la base d'une valeur de consigne plus faible que celle affichée à l'origine, ce qui contribue à empêcher un nouveau patinage si les conditions d'adhérence ne se sont pas améliorées.

L'invention prévoit avantageusement d'obtenir le signal de différence en soustrayant le signal de correction commun de la plus petite des valeurs de consigne, affichée et mémorisée.

Si entre-temps, par exemple pour respecter son programme de conduite, le conducteur a diminué la consigne affichée, la rendant inférieure à la consigne mémorisée, même décrémentée, c'est la plus faible des deux consignes qui est prise en compte, rendant l'initiative au conducteur.

Suivant une réalisation perfectionnée du procédé, on augmente progressivement la valeur de consigne mémorisée quand cette valeur est inférieure à la valeur de consigne affichée et quand, en même temps, le signal de correction commun est inférieur à un seuil prédéterminé.

Quand le patinage s'atténue, cette remontée de la valeur de consigne permet d'anticiper la reprise de l'effort et d'obtenir, sur l'ensemble de l'opération un effort moyen de traction plus grand.

Suivant un autre aspect de l'invention, le dispositif de détection et de correction de patinage des roues d'au moins un essieu d'un engin moteur de chemin de fer comprend un étage d'affichage d'une valeur de consigne de l'effort de traction, et, sur chaque essieu, un étage de mesure de la vitesse et de calcul de l'accélération de cet essieu. Il est caractérisé en ce qu'il comprend :

a) pour chaque essieu, un dérivateur relié à l'étage de calcul de l'accélération, un sommateur relié à l'étage de calcul de l'accélération et au dérivateur, et ayant sa sortie reliée à un étage à seuil ;

b) un étage de comparaison de signaux relié aux sorties des étages à seuil ;

c) un soustracteur recevant sur ses entrées respectives une valeur de consigne et la sortie de l'étage de comparaison, la sortie de ce soustracteur étant reliée à un organe de commande des moteurs de l'engin moteur.

D'autres particularités et avantages de l'invention ressortiront encore de la description détaillée qui va suivre.

Aux dessins annexés, donnés à titre d'exemple non limitatif :

la figure 1   est un schéma des étages d'élaboration des signaux de détection ;

la figure 2   est un diagramme temporel montrant une forme du signal de détection ;

la figure 3   est un schéma des étages d'élaboration des signaux de correction partiels et du signal de correction commun ;

la figure 4   est un diagramme temporel du signal de correction commun ;

la figure 5   est un schéma de l'étage de mémorisation de la valeur de consigne et d'élaboration du signal de différence.

les figures 6 à 9   sont des schémas électriques détaillés relatifs au schéma de la figure 5 ;

la figure 10   est un schéma d'un ensemble de réalisation pour locomotive à deux bogies ;

les figures 11 et 12   sont des diagrammes temporels expérimentaux relatifs au fonctionnement du dispositif suivant l'invention.

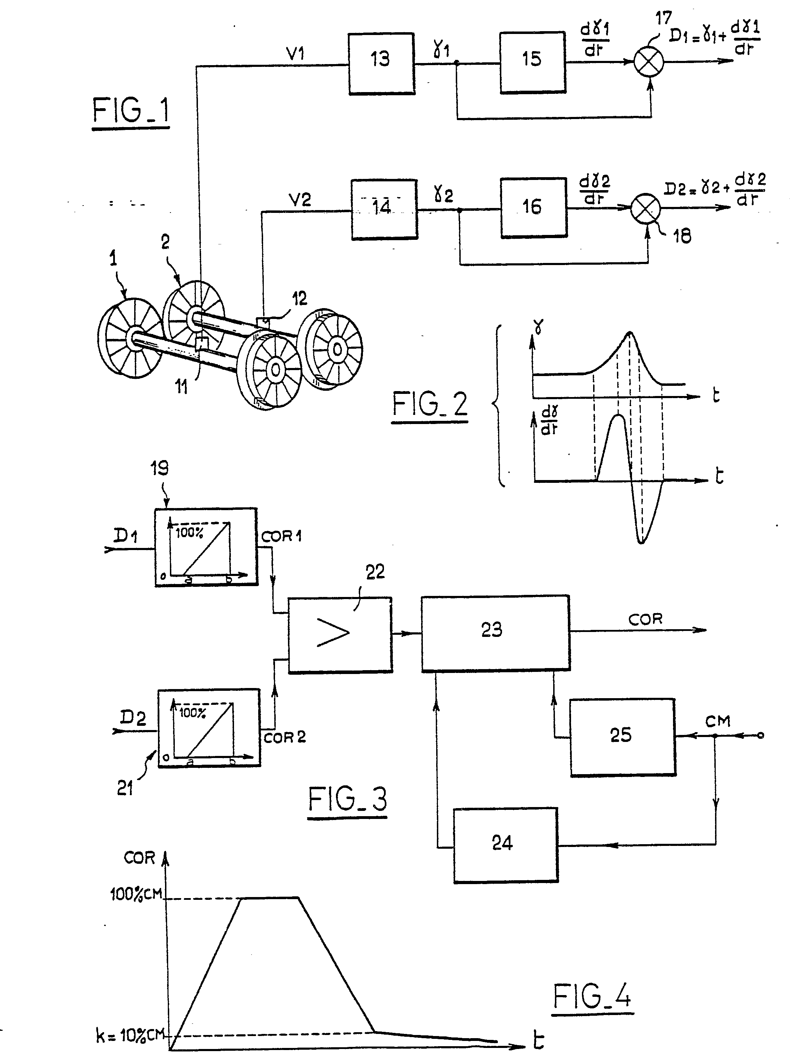

En référence à la figure 1, deux essieux 1, 2 de locomotive électrique sont actionnés chacun par un moteur (non représenté). Ces deux moteurs sont alimentés en série par l'intermédiaire d'un hacheur de courant commun réglable.

Sur chaque essieu est monté un tachymètre, respectivement 11, 12, d'un type connu, par exemple à impulsions, relié à un dérivateur respectif 13, 14.

Ces dérivateurs 13, 14 sont reliés respectivement aux entrées de deux autres dérivateurs 15, 16.

Un sommateur 17 a ses entrées reliées aux sorties des dérivateurs 13 et 15, et un sommateur 18 a ses entrées reliées aux sorties des dérivateurs 14 et 16.

On comprend que les dérivateurs 13, 14 recevant des signaux de vitesse V1, V2 délivrent en sortie des signaux d'accélération $\gamma1$, $\gamma2$. De même, les dérivateurs 15, 16 délivrent des signaux dérivés d'accélération $d\gamma1/dt$ et $d\gamma2/dt$.

Les sommateurs 17 et 18 délivrent donc des signaux de détection :

$$D1 = \gamma1 + (d\gamma1/dt)$$

$$D2 = \gamma2 + (d\gamma2/dt)$$

D'une façon plus générale, l'invention prévoit d'élaborer les signaux de détection sous la forme d'une combinaison linéaire :

$$D = \alpha\gamma + [\beta(d\gamma/dt)]$$

où $\alpha$ et $\beta$ sont des coefficients constants prédéterminés caractéristiques de la locomotive. En particulier, il est avantageux d'utiliser un coefficient $\beta$ supérieur à $\alpha$. Un tel résultat s'obtient par une modification simple des sommateurs.

Dans ce qui suit, on supposera, pour simplifier l'écriture, que $\alpha = \beta = 1$.

Les sommateurs 17, 18 sont reliés à des étages à seuils 19, 21 (figure 3) agencés pour délivrer en sortie des signaux de correction partiels COR1 et COR2 qui croissent linéairement en fonction des signaux D1, D2, de manière à passer de 0 à 100 % de leur valeur quand les signaux D1 et D2 passent d'un seuil a à un seuil b.

Les signaux COR1 et COR2 sont appliqués à un étage de comparaison 22 qui délivre en sortie le plus grand des deux.

On notera ici que, quand l'essieu 1 se met à patiner, son accélération augmente rapidement, et la dérivée de cette accélération prend une valeur positive importante (figure 2).

Après une action correctrice sur l'effort de traction, l'accélération de l'essieu 1 diminue rapidement, mais, puisqu'on ne compare pas les accélérations $\gamma1$ et $\gamma2$ entre elles, la décroissance de cette accélération ne peut pas être interprétée comme une augmentation de l'accélération de l'essieu 2. Le procédé de l'invention permet donc une identification parfaite de l'essieu qui patine.

Revenant sur le dispositif de la figure 3, l'étage de comparaison 22 est relié à un générateur de rampe 23 agencé pour délivrer un signal de correction commun COR (figure 4). Pour abréger l'écriture, le signal COR sera appelé dans ce qui suit « signal de correction ».

Le générateur de rampe 23 est commandé par un étage écrêteur 24 et par un étage de changement de pente 25 qui reçoivent chacun un signal de valeur de consigne CM qui sera précisé plus loin.

Le générateur de rampe est agencé de façon connue pour délivrer un signal COR croissant linéairement en fonction du temps, puis décroissant avec la même pente, qui, dans l'exemple décrit, est de 8,5 A/ms, avec éventuellement un écrêtage intermédiaire, sous la commande de l'écrêteur 24, de manière que le signal COR ne dépasse jamais 100 % du signal CM de valeur de consigne.

En outre, sous la commande de l'étage de changement de pente 25, la pente de décroissance du signal COR est diminuée et ramenée, dans l'exemple décrit, à 8 A/s quand ce signal, en décroissant, atteint une fonction prédéterminée k du signal CM. Par cette dernière disposition, on évite une disparition brusque du signal COR qui, comme on le verra plus loin, causerait une reprise brusque de l'effort de traction. Dans l'exemple décrit, k = 10 %.

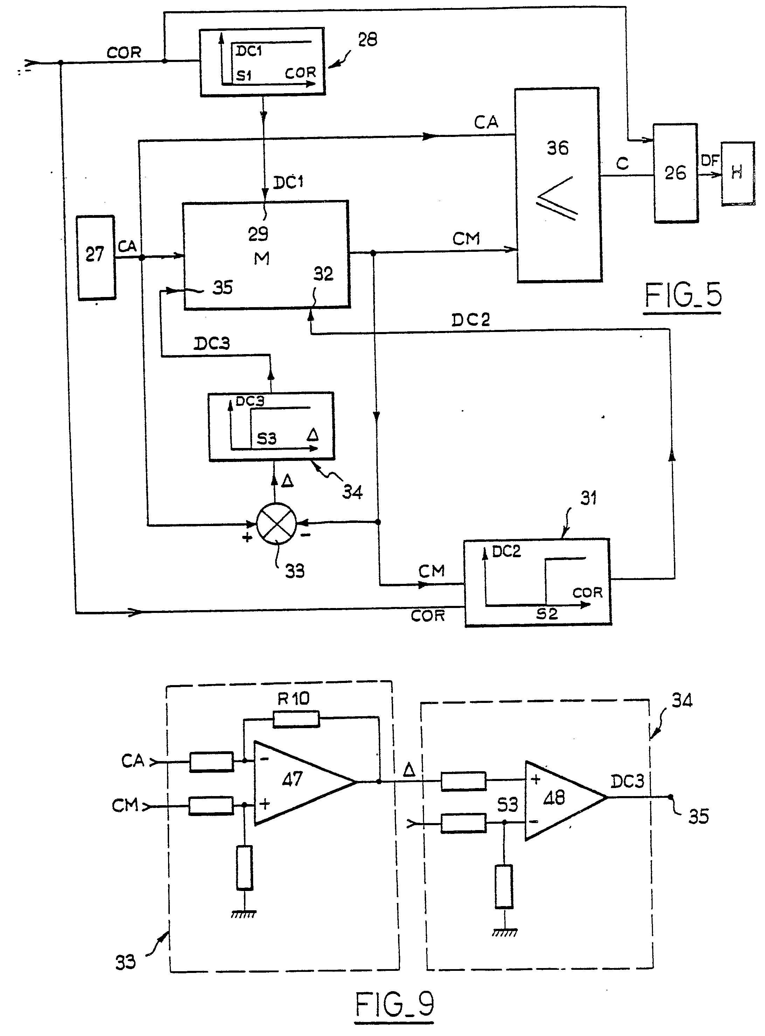

Le générateur de rampe 23 est relié à une entrée d'un soustracteur 26 (figure 5) qui reçoit par ailleurs un signal C de valeur de consigne qui sera précisé plus loin. La sortie de ce soustracteur est reliée à un hacheur de courant H qui commande les moteurs respectifs des essieux 1 et 2, et qui reçoit ainsi un signal de différence DF = C − COR.

En référence à la figure 5, la locomotive est munie d'un étage 27 d'affichage d'une valeur de consigne CA. Cet étage est actionné manuellement par le conducteur, et il est relié à un étage de mémoire M, où la valeur de consigne affichée CA est, en marche normale, continuellement stockée et mise à jour.

Le signal COR est appliqué à un premier déclencheur à seuil 28 qui délivre un signal de déclenchement DC1 quand le signal COR dépasse un seuil prédéterminé S1. Le signal DC1 est appliqué à une entrée de blocage 29 de la mémoire M pour bloquer cette mémoire en empêchant sa mise à jour à partir de l'étage d'affichage 27, et en empêchant que son contenu puisse être augmenté.

Le signal COR est également appliqué à un second déclencheur à seuil 31 relié à la mémoire M pour recevoir le contenu de cette mémoire, c'est-à-dire la valeur de consigne mémorisée CM. Ce déclencheur est agencé pour émettre un signal de déclenchement DC2 quand le signal COR dépasse un seuil S2 qui est égal à une fraction prédéterminée du signal CM (70 % dans l'exemple décrit).

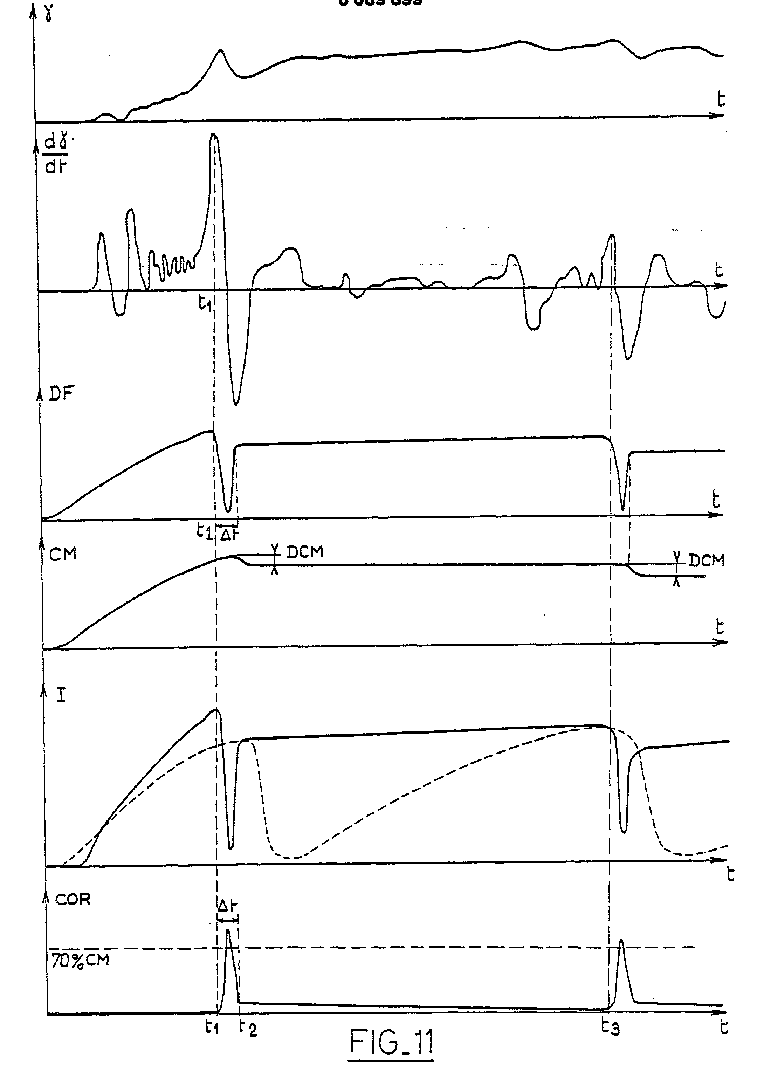

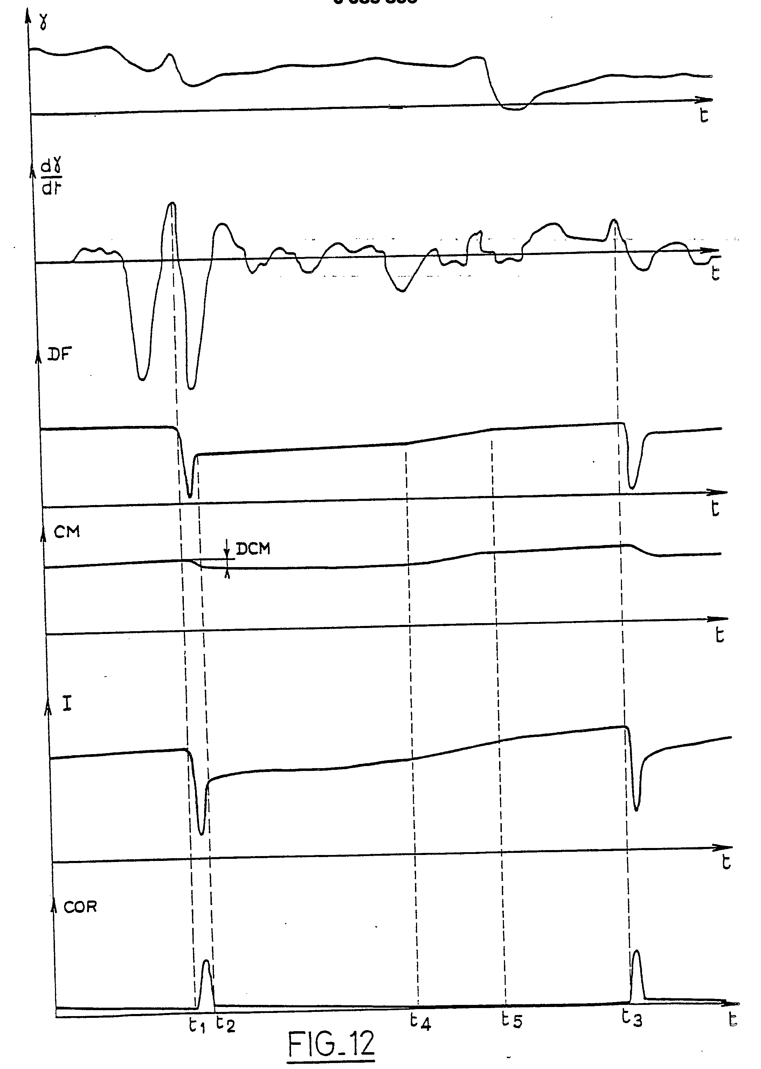

Le signal DC2 est appliqué à une entrée de décrémentation 32 de la mémoire M pour diminuer la valeur de consigne mémorisée d'une fraction prédéterminée DCM (figures 11, 12) qui, dans l'exemple décrit, est de 10 %.

Un soustracteur 33 a ses entrées reliées à l'étage d'affichage 27 et à la mémoire M pour calculer la différence Δ = CA − CM et appliquer ce signal à un troisième étage de déclenchement à seuil 34, agencé pour émettre un signal de déclenchement DC3 vers une entrée d'incrémentation 35 de la mémoire M quand la différence Δ dépasse un seuil prédéterminé S3 de faible valeur, ce qui revient pratiquement à déclencher l'incrémentation quand la valeur de consigne mémorisée CM est inférieure à la valeur de consigne affichée CA. Cette incrémentation s'effectue sous la forme d'une augmentation lente de la valeur de consigne CM.

Bien entendu, cette augmentation ne peut se produire que si le signal de blocage DC1 n'est pas présent, c'est-à-dire si le signal COR est inférieur au seuil S1.

Un étage de comparaison 36 est relié par ses entrées à l'étage d'affichage 27 et à la mémoire M pour émettre en sortie un signal C qui est le plus petit des deux signaux CA et CM et qui est la valeur de consigne C appliquée au soustracteur 26.

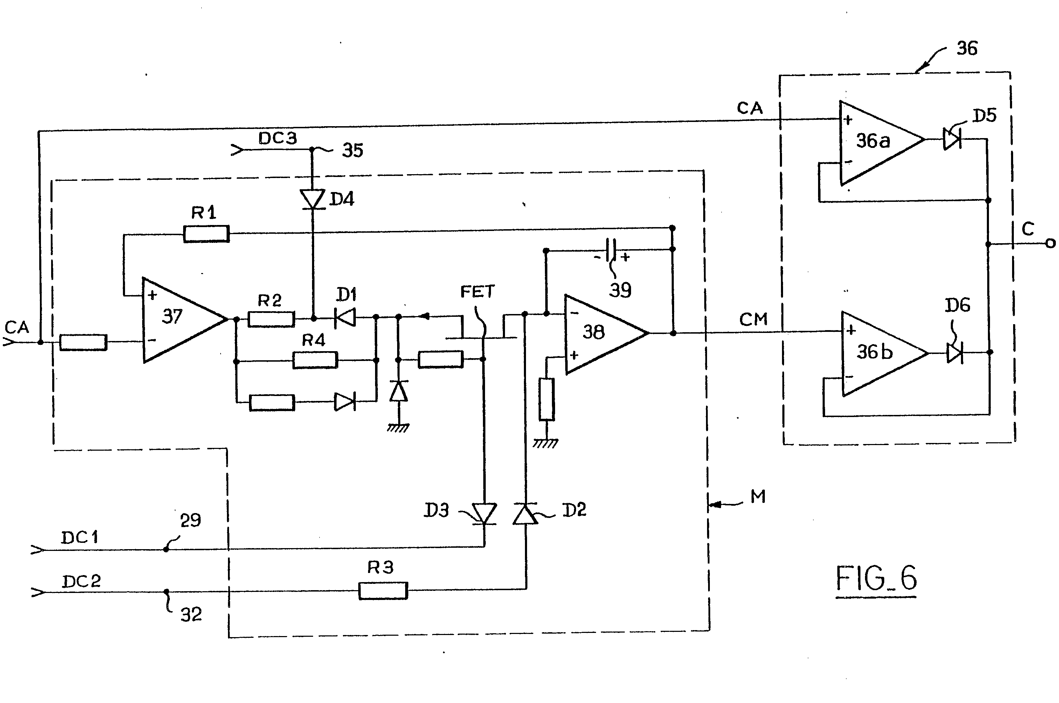

On va maintenant décrire, en référence aux figures 6 à 9, un certain nombre des étages mentionnés plus haut.

La figure 6 représente en détails les principaux éléments de la figure 5, c'est-à-dire la mémoire M et ses annexes.

L'étage M comprend deux amplificateurs opérationnels 37, 38 montés en étage suivant par l'intermédiaire d'une résistance R1 qui relie la sortie du second à l'entrée + du premier.

Le signal CA de valeur de consigne affichée est appliqué sur l'entrée − de l'amplificateur 37 dont la sortie est reliée à l'entrée − de l'amplificateur 38 par l'intermédiaire d'un montage en série comprenant une résistance R2, une diode D1 passante vers l'amplificateur 37 et le circuit drain-source d'un transistor à effet de champ FET.

Un condensateur 39 est monté entre l'entrée − et la sortie de l'amplificateur 38, dont l'entrée + est à la masse par l'intermédiaire d'une résistance.

L'entrée − de l'amplificateur 38 est encore reliée à l'entrée de décrémentation 32 de l'étage M par l'intermédiaire d'une diode D2 passante à partir de cette entrée 32, et d'une résistance R3.

La grille du transistor FET est reliée à l'entrée 29 de blocage de l'étage M par l'intermédiaire d'une diode D3 passante vers cette entrée.

L'entrée 35 d'incrémentation de l'étage M est reliée au point commun à la résistance R2 et à la diode D1 par l'intermédiaire d'une diode D4 passante vers ce point commun.

Enfin, l'ensemble formé par la résistance R2 et la diode D1 est shunté par une résistance R4 de valeur élevée (383 kΩ dans l'exemple décrit, alors que la résistance R2 vaut 6,8 kΩ).

Par ailleurs, l'étage de comparaison 36 (figure 5) est réalisé sous la forme de deux amplificateurs opérationnels 36a, 36b bouclés sur leur sortie commune qu'ils attaquent par l'intermédiaire de diodes D5, D6.

Les composants représentés sur la figure 6 mais non décrits relèvent de la technologie courante en la matière.

Quand aucun signal de blocage DC1 n'apparaît sur l'entrée 29, le transistor FET est passant et le condensateur 39 se charge à partir de la sortie (négative) de l'amplificateur 37 pour mémoriser la valeur du signal CA, suivant les polarités indiquées. Dès l'apparition du signal DC1, le transistor FET est bloqué par l'intermédiaire de la diode D3 et la valeur CM contenue dans le condensateur 39 est bloquée.

D'autre part, quand un signal DC2 est présent sur l'entrée 32, il décharge le condensateur 39 par l'intermédiaire de la diode D2 et de la résistance R3 qui confère à cette décharge une certaine constante de temps.

Enfin, quand un signal DC3 est présent sur l'entrée 35, il bloque le passage du courant entre la résistance R2 et la diode D1. Le condensateur 39 se charge alors lentement par l'intermédiaire de la résistance R4. Bien entendu, cette charge ne peut s'effectuer qu'en l'absence du signal de blocage DC1.

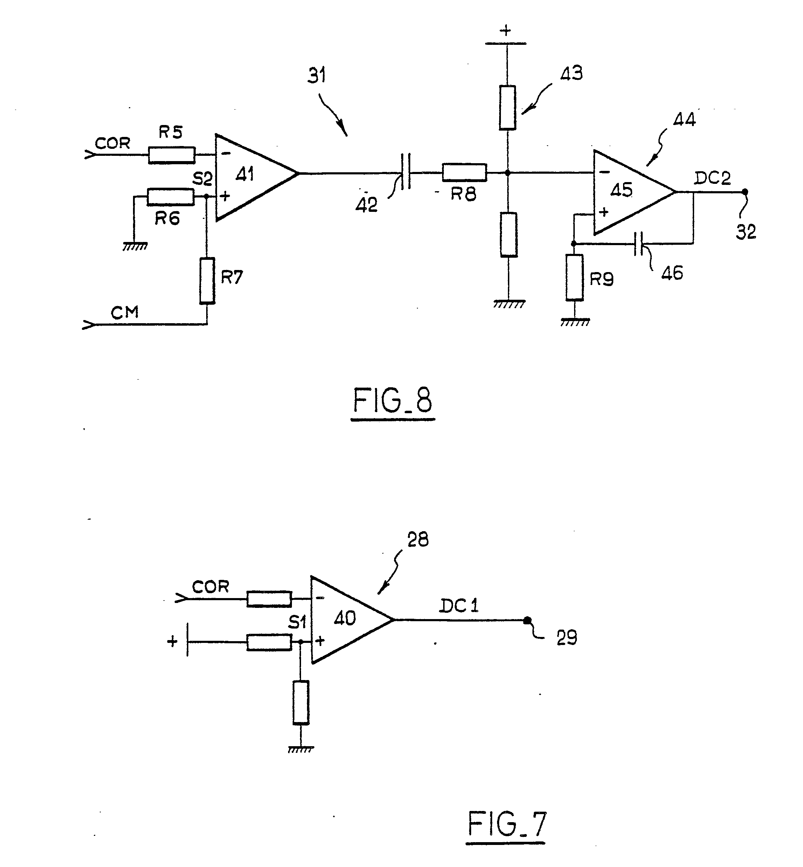

En référence à la figure 7, l'étage à seuil 28 (figure 5) comprend un amplificateur opérationnel 40 recevant sur son entrée − le signal COR et son entrée + une tension constante positive de 15 V. Il est agencé pour délivrer un signal de sortie DC1 qui vaut + 15 volts quand le signal COR est inférieur au seuil S1 et − 15 volts quand le signal COR est supérieur à ce seuil, débloquant ou bloquant ainsi respectivement la mémoire M.

On va maintenant décrire, en référence à la figure 8, l'étage à seuil 31 qui délivre le signal DC2 sur l'entrée de décrémentation 32 de la mémoire M.

Un amplificateur opérationnel 41 reçoit sur son entrée − le signal COR à travers une résistance R5, et son entrée + est reliée à la masse à travers une résistance R6 et à la mémoire M à travers une résistance R7. Ces résistances sont calculées pour que l'amplificateur bascule quand le signal COR dépasse 70 % du signal CM, sa sortie passant de + 15 V à − 15 V.

Un montage dérivateur comprenant un condensateur 42 et une résistance R8 en série reliée à un point d'un diviseur de tension 43 est monté en sortie de l'amplificateur 41 pour attaquer un étage monostable 44 constitué d'un amplificateur opérationnel 45 dont la sortie et l'entrée + sont bouclées par un condensateur 46, une résistance R9 reliant l'entrée + à la masse.

On comprend que, lorsque le signal COR dépasse la valeur de 70 % du signal CM, une impulsion positive DC2 est envoyée pendant un temps correspondant à la durée du monostable pour décharger la mémoire M d'une quantité prédéterminée comme indiqué plus haut.

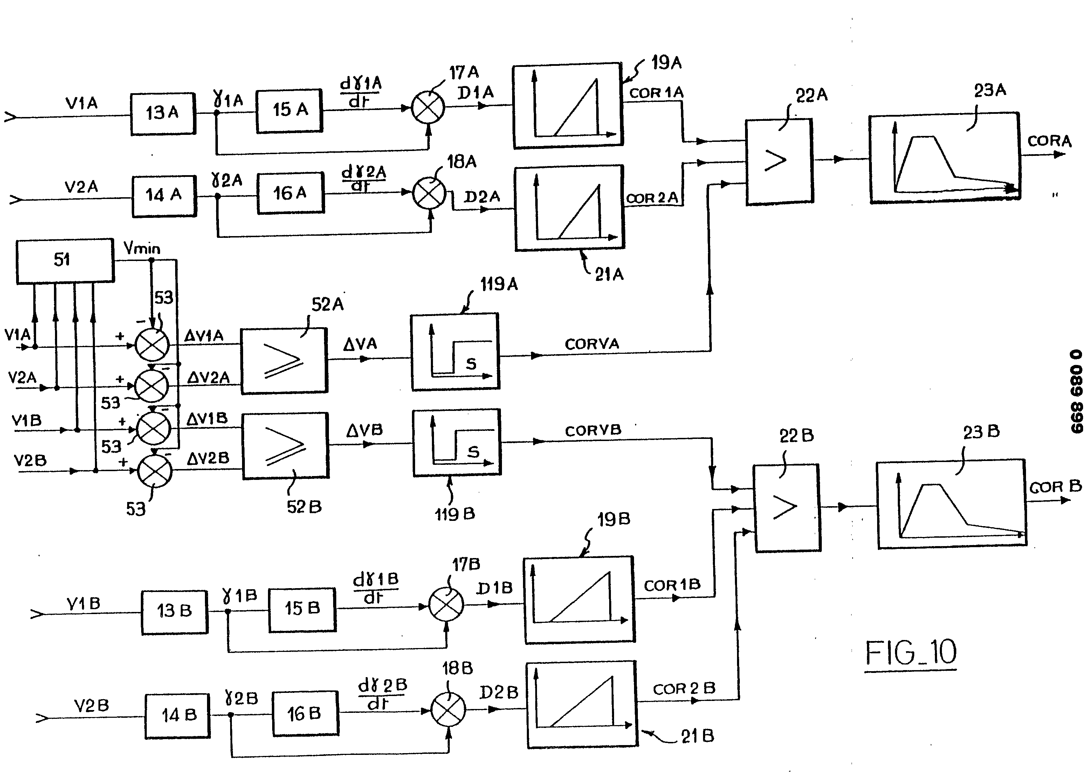

On va maintenant décrire, en référence à la figure 9, l'ensemble du soustracteur 33 et de l'étage à seuil 34 qui délivre un signal DC3 autorisant une augmentation lente de la valeur de consigne mémorisée CM.

Un amplificateur opérationnel 47 reçoit sur son entrée − le signal CA de valeur de consigne affichée et sur son entrée + la valeur de consigne mémorisée CM. Il est bouclé par une résistance R10. Sa sortie délivre un signal égal à CM−CA pour attaquer l'entrée + d'un amplificateur opérationnel 48 dont l'entrée − reçoit une tension prédéterminée constituant le seuil S3. Cet amplificateur délivre en sortie le signal DC3. On rappelle que ce signal est inopérant si la mémoire est en état de blocage.

On va maintenant décrire, en référence à la figure 10, un ensemble de détection et d'élaboration de signaux de correction pour une locomotive à deux bogies A et B comportant chacun deux essieux 1A, 2A, et 1B, 2B respectivement (non représentés). Chacun des essieux est entraîné par un moteur, les deux moteurs étant montés en série et commandés par un même hacheur.

Pour chaque paire d'essieux, on effectue les mêmes opérations que celles décrites plus haut, en utilisant les mêmes étages que ceux décrits en référence à la figure 1 pour obtenir, pour chaque essieu, des signaux de détection respectifs D1A, D2A pour le bogie A et D1B, D2B pour le bogie B. On ne décrira pas en détail ces étages, qui ont reçu les mêmes numéros de référence affectés de l'indice A ou B.

Ces signaux de détection sont transformés en signaux de correction partiels COR 1A, COR 2A, COR 1B, COR 2B dans des étages à seuils 19A, 21A, 19B, 21B analogues aux étages 19, 21 de la figure 3.

D'autre part, les quatre vitesses V1A, V2A, V1B, V2B sont appliquées à un étage de sélection 51 qui délivre en sortie la plus petite Vmin de ces vitesses. Des soustracteurs 53 déterminent les écarts ΔV1A, ΔV2A, ΔV1B, ΔV2B de chaque vitesse avec la vitesse Vmin. Les deux écarts relatifs à chaque bogie sont comparés dans un étage de comparaison 52A (respectivement 52B) qui choisit le plus grand ΔVA des deux écarts (respectivement ΔVB).

Ces signaux d'écart sont appliqués à des étages à seuils respectifs 119A, 119B qui émettent chacun un signal de correction de vitesse constant CORVA, CORVB quand les signaux d'écart dépassent un seuil S.

Le signal CORVA est appliqué avec les signaux COR 1A et COR 2A à un étage de comparaison 22A qui choisit le plus grand pour l'appliquer à un générateur de rampe 23A fournissant un signal de correction CORA correspondant au bogie A.

La même opération s'effectue pour le bogie B.

L'intervention de l'écart de vitesse dans la détection constitue une sécurité dans des circonstances particulières où la détection par l'accélération et sa dérivée serait inefficace.

On va maintenant décrire le fonctionnement d'un dispositif conforme à l'invention sur un exemple réel, en référence aux figures 11 et 12 qui sont des diagrammes enregistrés relatifs à un essieu.

De haut en bas, ces diagrammes représentent l'accélération γ, sa dérivée dγ/dt, le signal de différence DF appliqué au hacheur, la valeur de consigne mémorisée CM, le courant I appliqué au moteur, et le signal COR.

A un instant t1, la dérivée de l'accélération augmente brusquement, ce qui provoque l'apparition du signal COR, dont la portion à forte pente (montante puis descendante) dure un temps Δt relativement court. Ensuite, à partir de l'instant t2, sa descente est beaucoup plus lente.

Pendant le temps Δt, le signal de différence DF = CM − COR marque une décroissance brusque qui se traduit par une chute du courant I appliqué au moteur en vue de diminuer l'effort de traction.

Le signal COR ayant atteint plus de 70 % de la valeur de consigne mémorisée CM, cette dernière subit une décrémentation DCM de 10 %, de sorte qu'à la reprise de l'effort, à l'instant t2, le signal DF sera plus faible que dans la phase précédente, ainsi que l'intensité I appliquée au moteur. Il en

résulta un effort de traction plus faible et une diminution du risque de voir apparaître à nouveau une perte d'adhérence.

Pendant la descente lente du signal COR, les valeurs DF et I augmentent de façon correspondante sans atteindre toutefois leurs valeurs de la phase précédente.

Malgré cet abaissement de la consigne mémorisée, un nouveau patinage se produit à l'instant t3. Le signal COR dépassant encore 70 % de la consigne mémorisée, une nouvelle décrémentation DCM est opérée pour diminuer encore le risque d'une nouvelle perte d'adhérence.

On notera que, pour calculer le signal de différence DF, on soustrait le signal COR de la plus petite des deux valeurs de consigne (mémorisée et affichée). Normalement, la première est plus petite que la seconde. Mais il peut se produire qu'entre-temps le conducteur ait diminué la valeur de consigne affichée pour respecter son programme de marche, et que cette valeur soit devenue inférieure à CM. C'est bien entendu la valeur de consigne affichée qui doit être prise en compte.

On a représenté en trait tireté les résultats obtenus avec les procédés traditionnels sur le courant moteur I. On constate d'abord un retard notable de l'effet de correction, puis une reprise très lente de l'effort de traction qui remonte finalement jusqu'à sa valeur primitive, avec conservation des risques initiaux de perte d'adhérence. En outre, l'effort de traction moyen est notablement inférieur.

Le diagramme de la figure 12 se rapporte à un phénomène analogue. Mais ici, à l'instant t4, le signal COR est devenu inférieur au seuil S1, ce qui autorise l'augmentation lente de la valeur de consigne mémorisée CM jusqu'à l'instant t5 où elle rejoint la valeur de consigne affichée. Il en résulte une amélioration supplémentaire de l'effort de traction moyen.

Dans le cas du dispositif de la figure 10, on peut calculer les signaux d'écart de vitesse $\Delta V1A$, $\Delta V2A$, $\Delta V1B$, $\Delta V2B$ par rapport à une vitesse de référence Vr autre que la vitesse Vmin.

## Revendications

1. Procédé pour la détection et la correction du patinage des roues d'au moins un essieu d'un engin moteur de chemin de fer, dans lequel on mesure l'accélération ($\gamma1$, $\gamma2$) des essieux (1, 2) pour élaborer un signal réglant l'effort de traction par action sur les organes moteurs (H) de l'engin moteur, caractérisé en ce qu'on effectue les opérations suivantes :

a) on détermine la dérivée de l'accélération ($d\gamma1/dt$, $d\gamma2/dt$) de chaque essieu ;

b) on élabore, pour chaque essieu, un signal de détection (D1, D2) qui est une combinaison linéaire de l'accération et de sa dérivée ;

c) on élabore des signaux de correction partiels (COR1, COR2) croissants en fonction de chaque signal de détection respectif (D1, D2) ;

d) on détermine le plus grand des signaux de correction partiels pour constituer un signal de correction commun (COR) ;

e) on calcule un signal de différence (DF) entre le signal de correction (COR) et une valeur de consigne (C) ;

f) on règle l'effort de traction par action sur un organe moteur (H) de l'engin moteur en fonction dudit signal de différence (DF).

2. Procédé conforme à la revendication 1, caractérisé en ce qu'on écrête le signal de correction commun (COR) de manière qu'il ne soit jamais supérieur à la valeur de consigne (C).

3. Procédé conforme à la revendication 2, caractérisé en ce que, quand le signal de correction commun atteint, en décroissant, une fraction prédéterminée (k) de la valeur de consigne (CM), on le fait décroître plus lentement.

4. Procédé conforme à l'une des revendications 1 à 3, dans lequel un conducteur affiche une valeur de consigne (CA) correspondant à un effort de traction prédéterminé optimal, caractérisé en ce qu'on effectue les opérations suivantes :

on met en mémoire (M) cette valeur de consigne ;

on bloque la mémoire (M) quand apparaît un signal de correction commun (COR) qui dépasse une valeur prédéterminée (S1) ;

on décrémente la valeur de consigne mémorisée (CM) d'une fraction prédéterminée (DCM) quand le signal de correction commun dépasse une fraction prédéterminée (S2) de cette valeur de consigne.

5. Procédé conforme à la revendication 4, caractérisé en ce qu'on obtient le signal de différence (DF) en soustrayant le signal de correcton commun (COR) de la plus petite (C) des valeurs de consigne, affichée (CA) et mémorisée (CM).

6. Procédé conforme à l'une des revendications 4 ou 5, caractérisé en ce qu'on augmente progressivement la valeur de consigne mémorisée (CM) quand cette valeur est inférieure à la valeur de consigne affichée (CA) et quand, en même temps, le signal de correction (COR) commun est inférieur à un seuil prédéterminé (S1).

7. Procédé conforme à l'une des revendications 1 à 6, caractérisé en ce qu'on calcule un signal d'écart ($\Delta V$) de vitesse entre les essieux pour élaborer un signal de correction de vitesse (CORVA, CORVB) et en ce qu'on compare ce signal avec les signaux de correction partiels (COR 1A, COR 2A ; COR 1B, COR 2B) pour choisir le plus grand des trois signaux comme signal de correction commun (CORA, CORB) (Fig. 10).

8. Procédé conforme à la revendication 7, applicable à un engin moteur à deux bogies (A, B) ayant chacun deux essieux (1A, 2A ; 1B, 2B) commandés par deux moteurs respectifs en série, caractérisé en ce qu'on mesure l'écart d'une vitesse de référence (Vr) avec la vitesse des quatre essieux, en ce qu'on calcule deux signaux ($\Delta V1A$, $\Delta V2A$ ; $\Delta V1B$, $\Delta V2B$) d'écart de

vitesse pour chaque bogie, et en ce qu'on choisit, pour chaque bogie, le plus grand ($\Delta$VA, $\Delta$VB) des deux écarts pour le comparer aux signaux de correction partiels (COR 1A, COR 2A ; COR 1B, COR 2B) de chaque essieu.

9. Procédé conforme à la revendication 8, caractérisé en ce que la vitesse de référence (Vr) est la plus petite (Vmin) des vitesses des quatre essieux.

10. Dispositif de détection et de correction de patinage des roues d'au moins un essieu d'une locomotive de chemin de fer, comprenant un étage d'affichage (27) d'une valeur de consigne (CA) de l'effort de traction, et, sur chaque essieu (1, 2), un étage de mesure (11, 12) de la vitesse (V1, V2) et de calcul (13, 14) de l'accélération ($\gamma$1, $\gamma$2) de cet essieu, caractérisé en ce qu'il comprend :

a) pour chaque essieu, un dérivateur (15, 16) relié à l'étage de calcul (15, 16) de l'accélération, un sommateur (17, 18) relié à l'étage de calcul (13, 14) de l'accélération et au dérivateur (15, 16), et ayant sa sortie reliée à un étage à seuil (19, 21) ;

b) un étage (22) de comparaison de signaux relié aux sorties des étages à seuil (19, 21) ;

c) un soustracteur (26) recevant sur ses entrées respectives une valeur de consigne (C) et la sortie (COR) de l'étage de comparaison (22), la sortie de ce soustracteur étant reliée à un organe de commande (H) des moteurs de l'engin moteur.

11. Dispositif conforme à la revendication 10, caractérisé en ce qu'il comprend un étage de mémoire (M) relié entre l'étage d'affichage (27) de la valeur de consigne (CA) et l'entrée correspondante de l'étage de comparaison (22).

12. Dispositif conforme à la revendication 11, caractérisé en ce qu'il comprend un étage de déclenchement à seuil (31) relié par ses entrées à l'étage (22) de comparaison de signaux et à la sortie de l'étage de mémoire (M) et par sa sortie à une entrée (32) de décrémentation de l'étage de mémoire (M).

13. Dispositif conforme à la revendication 12, caractérisé en ce qu'il comprend un étage (33) de comparaison de consigne relié par ses entrées à l'étage d'affichage de consigne (27) et à la sortie de l'étage de mémoire (M), et ayant une sortie reliée à un étage de déclenchement à seuil (34), dont la sortie est reliée à une entrée (35) d'incrémentation de l'étage de mémoire (M).

**Claims**

1. A method of detecting and correcting the slipping of the wheels of at least one axle of a railway drive vehicle, in which the acceleration ($\gamma$1, $\gamma$2) of the axles (1, 2) is measured to provide a signal controlling the traction force by acting on the drive means (H) of the drive vehicle, characterised in that the following operations are carried out :

a) the acceleration derivative (d$\gamma$1/dt, d$\gamma$2/dt) of each axle is determined ;

b) a detection signal (D1, D2) is prepared for each axle, such signal being a linear combination of the acceleration and of its derivative ;

c) partial correction signals (COR1, COR2) are prepared which increase as a function of each respective detection signal (D1, D2) ;

d) the larger of the partial correction signals is determined to form a common correction signal (COR) ;

e) a signal (DF) is calculated representing the difference between the correction signal (COR) and a reference value (C) ;

f) the traction is regulated by acting on a drive means (H) of the drive vehicle as a function of the difference signal (DF).

2. A method according to claim 1, characterised in that the common correction signal (COR) is so clipped as never to be greater than the reference value (C).

3. A method according to claim 2, characterised in that when the common correction signal at it decreases reaches a predetermined fraction (k) of the reference value (CM), said common correction signal is decreased more slowly.

4. A method according to any one of claims 1 to 3, in which a driver sets a reference value (CA) corresponding to an optimum predetermined traction force, characterised in that the following operations are carried out :

the said reference value is stored in a memory (M) ;

the memory (M) is blocked when a common correction signal (COR) appears which exceeds a predetermined value (S1) ;

the stored reference values (CM) is decremented by a predetermined fraction (DCM) when the common correction signal exceeds a predetermined fraction (S2) of said reference value.

5. A method according to claim 4, characterised in that the difference signal (DF) is obtained by subtracting the common correction signal (COR) from whichever is the smaller (C) of the set reference value (CA) and the stored value (CM).

6. A method according to claim 4 or 5, characterised in that the stored reference value (CM) is progressively increased when said value is below the set reference value (CA) and when at the same time the common correction signal (COR) is less than a predetermined threshold (S1).

7. A method according to any one of claims 1 to 6, characterised in that a deviation signal ($\Delta$V) is calculated for the speed deviation between the axles in order to produce a speed correction signal (CORVA, CORVB) and in that this signal is compared with the partial correction signals (COR 1A, COR 2A ; COR 1B, COR 2B) in order to choose the largest of the three signals as the common correction signal (CORA, CORB) (Fig. 10).

8. A method according to claim 7, applicable to a drive vehicle with two bogies (A, B) each having two axles (1A, 2A ; 1B, 2B) driven by two respective motors in series, characterised in that the deviation from a reference speed (Vr) is measured with the speed of the four axles, in that two signals ($\Delta$V 1A, $\Delta$V 2A ; $\Delta$V 1B, $\Delta$V 2B) are

calculated for the speed deviation for each bogie, and in that the larger (ΔVa, ΔVb) of the two deviations is selected for each bogie in order to compare it with the partial correction signals (COR 1A, COR 2A ; COR 1B, COR 2B) of each axle.

9. A method according to claim 8, characterised in that the reference speed (Vr) is the lowest (Vmin) of the speeds of the four axles.

10. A device for detecting and correcting the slipping of the wheels of at least one axle of a railway locomotive, comprising a stage (27) for setting a reference value (CA) for the traction and, on each axle (1, 2) a stage (11, 12) for measuring the speed (V1, V2) and a stage (13, 14) for calculating the acceleration (γ1, γ2) of said axle, characterised in that it comprises :

a) for each axle, a derivator (15, 16) connected to the stage (15, 16) for calculating the acceleration, a summator (17, 18) connected to the acceleration calculation stage (13, 14) and to the derivator (15, 16) and having its output connected to a threshold stage (19, 21) ;

b) a signal comparison stage (22) connected to the outputs of the threshold stages (19, 21) ;

c) a subtractor (26) the respective inputs of which receive a reference value (C) and the output (COR) of the comparison stage (22), the output of said subtractor being connected to a control means (H) for the motors of the drive vehicle.

11. A device according to claim 10, characterised in that it comprises a memory stage (M) connected between the reference value (CA) setting stage (27) and the corresponding input of the comparison stage (22).

12. A device according to claim 11, characterised in that it comprises a threshold trigger stage (31) connected by its inputs to the signal comparison stage (22) and to the output of the memory stage (M) and by its output to a decrementation input (32) of the memory stage (M).

13. A device according to claim 12, characterised in that it comprises a reference comparator stage (33) connected by its inputs to the reference value setting stage (27) and to the output of the memory stage (M) and having an output connected to a threshold trigger stage (34) whose output is connected to an incrementation input (35) of the memory stage (M).

## Patentansprüche

1. Verfahren zur Erfassung und Korrektur des Schlupfes der Räder an wenigstens einer Achse eines Schienentriebfahrzeuges, bei welchem die Beschleunigung (γ1, γ2) der Achsen (1, 2) gemessen wird, um ein Signal zu erzeugen, welches die Antriebskraft regelt, indem auf die Antriebsorgane (H) des Triebfahrzeugs eingewirkt wird, dadurch gekennzeichnet, daß folgende Operationen durchgeführt werden :

a) es wird die Ableitung der Beschleunigung (dγ1/dt, dγ2/dt) jeder Achse bestimmt ;

b) für jede Achse wird ein Detektionssignal (D1, D2) erzeugt, welches eine Linearkombination der Beschleunigung und ihrer Ableitung ist ;

c) es werden partielle Korrektursignale (COR1, COR2) erzeugt, welche in Abhängigkeit von dem jeweiligen Detektionssignal (D1, D2) zunehmen ;

d) es wird das größte der partiellen Korrektursignale bestimmt, um ein gemeinsames Korrektursignal (COR) zu bilden ;

e) es wird ein Differenzsignal (DF) zwischen dem Korrektursignal (COR) und einem Sollwert (C) berechnet ;

f) die Antriebskraft wird durch Einwirken auf das Antriebsorgan (H) des Triebfahrzeuges in Abhängigkeit von dem Differenzsignal (DF) geregelt.

2. Verfahren nach Anspruch 1, dadurch gekennzeichnet, daß das gemeinsame Korrektursignal (COR) derart begrenzt wird, daß es niemals den Sollwert (C) überschreitet.

3. Verfahren nach Anspruch 2, dadurch gekennzeichnet, daß das gemeinsame Korrektursignal, wenn es absinkt und einen vorbestimmten Bruchteil (k) des Sollwertes (CM) erreicht, langsamer abgesenkt wird.

4. Verfahren nach einem der Ansprüche 1 bis 3, bei welchem ein Fahrer einen Sollwert (CA) einstellt, welcher einer vorbestimmten optimalen Antriebskraft entspricht, dadurch gekennzeichnet, daß folgende Operationen ausgeführt werden :

dieser Sollwert wird in einen Speicher (M) eingegeben ;

der Speicher (M) wird blockiert, wenn ein gemeinsames Korrektursignal (COR) erscheint, welches einen vorbestimmten Wert (S1) überschreitet ;

der gespeicherte Sollwert (DM) wird um einen vorbestimmten Bruchteil (DCM) vermindert, wenn das gemeinsame Korrektursignal einen vorbestimmten Bruchteil (S2) dieses Sollwertes überschreitet.

5. Verfahren nach Anspruch 4, dadurch gekennzeichnet, daß das Differenzsignal (DF) erhalten wird, indem das gemeinsame Korrektursignal (COR) von dem kleinsten (C) der beiden, eingestellten (CA) bzw gespeicherten (CM) Sollwerte subtrahiert wird.

6. Verfahren nach Anspruch 4 oder 5, dadurch gekennzeichnet, daß der gespeicherte Sollwert (CM) progressiv vergrößert wird, wenn dieser Wert kleiner ist als der eingestellte Sollwert (CA) und wenn gleichzeitig das gemeinsame Korrektursignal (CR) kleiner als ein vorbestimmter Schwellwert (S1) ist.

7. Verfahren nach einem der Ansprüche 1 bis 6, dadurch gekennzeichnet, daß ein Geschwindigkeitsabweichungssignal (ΔV) für die Abweichung zwischen den Achsen berechnet wird, um ein Geschwindigkeitskorrektursignal (CORVA, CORVB) zu erzeugen, und daß dieses Signal mit den partiellen Korrektursignalen (COR 1A, COR 2A ; COR 1B, COR 2B) verglichen wird, um das größte der drei Signale als gemeinsames Korrektursignal (CORA, CORB) auszuwählen (Fig. 10).

8. Verfahren nach Anspruch 7, das auf einen Triebfahrzeug mit zwei Drehgestellen (A, B) anwendbar ist, die jeweils zwei Achsen (1A, 2A ; 1B, 2B) aufweisen, welche durch entsprechende, in Serie liegende Motoren angetrieben werden, dadurch gekennzeichnet, daß die Abweichung einer Referenzgeschwindigkeit (Vr) von der Geschwindigkeit der vier Achsen gemessen wird, daß zwei Signale ($\Delta$V 1A, $\Delta$V 2A ; $\Delta$V 1B, $\Delta$V 2B) für die Geschwindigkeitsabweichung jedes Drehgestells berechnet werden und daß für jedes Drehgestell die größere ($\Delta$VA, $\Delta$VB) der beiden Abweichungen ausgewählt wird, um sie mit den partiellen Korrektursignalen (COR 1A, COR 2A ; COR 1B, COR 2B) für jede Achse zu vergleichen.

9. Verfahren nach Anspruch 8, dadurch gekennzeichnet, daß die Referenzgeschwindigkeit (Vr) die kleinste (Vmin) der Geschwindigkeiten der vier Achsen ist.

10. Vorrichtung zur Erfassung und Korrektur des Schlupfes der Räder wenigstens einer Achse einer Eisenbahnlokomotive, mit einer Einstellstufe (27) zur Einstellung eines Sollwertes (CA) für die Antriebskraft und mit einer Stufe (11, 12) an jeder Achse (1, 2) zur Messung der Geschwindigkeit (V1, V2) und zur Berechnung (13, 14) der Beschleunigung ($\gamma$1, $\gamma$2) an dieser Achse, dadurch gekennzeichnet, daß sie umfaßt :

a) für jede Achse einen Ableitungserzeuger (15, 16), welcher mit der Rechenstufe (15, 16) zur Berechnung der Beschleunigung verbunden ist, einen Summierer (17, 18), welcher mit der Rechenstufe (13, 14) zur Berechnung der Beschleunigung und mit dem Ableitungserzeuger (15, 16) verbunden ist und dessen Ausgang mit einer Schwellwertstufe (19, 21) verbunden ist ;

b) eine Stufe (22) zum Vergleichen der Signale, welche mit den Ausgängen der Schwellwertstufen (19, 21) verbunden ist ;

c) einen Subtrahierer (26), welcher an seinen Eingängen einen Sollwert (C) bzw. das Ausgangssignal (COR) der Vergleicherstufe (22) empfängt, wobei der Ausgang dieses Subtrahierers mit einem Steuerorgan (H) zur Steuerung der Motoren des Triebfahrzeuges verbunden ist.

11. Vorrichtung nach Anspruch 10, dadurch gekennzeichnet, daß sie eine Speicherstufe (M) umfaßt, die zwischen die Einstellstufe (27) zur Einstellung des Sollwerts (CA) und den entsprechenden Eingang der Vergleicherstufe (22) eingefügt ist.

12. Vorrichtung nach Anspruch 11, dadurch gekennzeichnet, daß sie eine Schwellwertauslösestufe (31) umfaßt, welche an ihren Eingängen mit der Signalvergleicherstufe (22) und mit dem Ausgang der Speicherstufe (M) sowie an ihrem Ausgang mit einem Dekrementiereingang (32) der Speicherstufe (M) verbunden ist.

13. Vorrichtung nach Anspruch 12, dadurch gekennzeichnet, daß sie eine Sollwertvergleicherstufe (33) umfaßt, die an ihren Eingängen mit der Sollwert-Einstellstufe (27) und dem Ausgang der Speicherstufe (M) verbunden ist sowie einen Ausgang aufweist, der mit einer Schwellwert-Auslösestufe (34) verbunden ist, deren Ausgang mit einem Inkrementiereingang (35) der Speicherstufe (M) verbunden ist.

0 089 899

FIG_1

FIG_2

FIG_3

FIG_4

FIG_5

FIG_9

FIG. 6

0 089 899

FIG_8

FIG_7

FIG_10

668 680 0

FIG_11

FIG_12